# EUROPEAN PATENT SPECIFICATION

(11) **EP 4 248 282 B1**
(45) Date of publication and mention of the grant of the patent: **09.10.2024**
(21) Application number: 21735201.2
(22) Date of filing: 17.06.2021
(51) Int. Cl.: G05B 15/02, H04L 41/0806

(54) **CONFIGURATION OF A BUILDING**
KONFIGURATION VON EINEM GEBÄUDE
CONFIGURATION D'UN BATIMENT

(30) Priority: 18.11.2020 EP 20208305
(43) Date of publication of application: 27.09.2023
(73) Proprietor: Siemens Schweiz AG, 8047 Zürich (CH)
(72) Inventor: KRÄNZLIN-MEIER, Heinrich, 8835 Feusisberg (CH); KYBURZ, Beat, 8913 Ottenbach (CH); RENGGLI, Franz, 6023 Rothenburg (CH); VOGT, Andreas, 6005 Luzern (CH)
(74) Representative: Siemens Patent Attorneys
(86) International application number: PCT/EP2021/066347
(87) International publication number: WO 2022/106073

(56) References cited:
- US-A1- 2016 095 188
- US-A1- 2018 101 803
- US-A1- 2020 159 173

## Description

### Background

The present disclosure pertains to a configuration of a building having a plurality of devices such as controllers, radiators, compressors, evaporators, valves, etc. The configuration process accommodates dependencies between these devices. More specifically, the configuration of a commercial and/or residential and/or industrial site alleviates design and commissioning of such a site.

Commercial and/or residential and/or industrial sites typically comprise a plurality of appliances such as fans and/or heating fans and/or cooling fans and/or heating coils and/or cooling coils and/or compressors and/or evaporators and/or window blinds and/or radiators and/or chilled beams, etc. Commercial and/or residential and/or industrial sites also comprise a plurality of sensors such as temperature sensors, moisture sensors, luminosity sensors, sensors for volatile organic compounds, sensors for carbon dioxide etc. Readings are recorded from such sensors and those readings impact on the control of the building. A reading recorded from a temperature sensor can, by way of example, be relevant for an amount of cooling provided by a chilled beam inside a space. Likewise, a reading recorded from a luminosity sensor can determine the position of window blinds.

A site and/or a building typically comprises a plurality of controllers. The controllers link sensors such as temperature sensors or luminosity sensors to appliances and/or field devices such as chilled beams or window blinds. Not every controller is, however, compatible with every type of sensor. Likewise, a controller for controlling window blinds may not be suitable to control chilled beams.

A floor plan is established at the design stage and/or at the commissioning stage of a site. The floor plan establishes dependencies between appliances, sensors, and controllers. Creation of a floor plan involves specialist knowledge and numerous hours. The specialist needs to know whether certain devices can be linked to certain sensors. A controller can be required to link a device to a sensor. Also, the link between the appliance and the sensor can necessitate a special type of controller. Eventually, the floor plan will describe the complex relationships between a plethora of appliances and/or sensors and/or controllers of a commercial and/or residential and/or industrial building.

A European patent application EP3439235A1 was filed by ABB SCHWEIZ AG, CH on 4 August 2017. The application was published on 6 February 2019. EP3439235A1 deals with configuring and operating a system with building automation devices.

EP3439235A1 pertains to a method of configuring building automation devices. The building automation devices form a technical system of a building and perform functions related to the building. Configuration according to EP3439235A1 relies on three data structures. The first of these data structures is at a device agnostic level while the second data structure is at a device specific level. The first data structure specifies inter-device communication in a way that is not technology specific. The device-agnostic level generally defines communication in terms of system functions. At the device-agnostic level, functions can, by way of example, turn on and off lights.

Unlike the first data structure, the second data structure specifies inter-device communication during operation in a way that is specific for the devices in the building. Device-specific communication can, by way of example, involve parameters c1 to c9 that are specific to building-related functions of devices such as lighting devices.

EP3439235A1 deals with mapping signals at the device-agnostic level to signals at the device-specific level. Configuration settings are then determined that specify how devices communicate. Those configuration settings are transmitted to and applied by the respective building devices.

A patent application US2019/005438A1 was filed by Kirio Inc (Lynnwood, WA, US) on 10 August 2018. The application was published on 3 January 2019. US2019/005438A1 deals with an automated configuration system for a complex system requiring exhaustive custom programming.

US2019/005438A1 discloses a user interface for generating installation details. The user interface involves constraints of virtual devices as well as selectors to apply requirements of such interfaces. Eventually, a control interface is constructed that accounts for details of an installation.

A patent application US2016/095188A1 was filed by KONINKL PHILIPS NV, NL on 21 September 2015. The application was published on 31 March 2016. US2016/095188A1 deals with systems and methods for managing environmental conditions.

The instant disclosure introduces configuration of devices in a building, wherein the appliances and/or sensors and/or controllers are paired based on a (semantic) ontology description. The configuration based on a (semantic) ontology description mitigates issues due to complexity of floor plans of large buildings.

### Summary

The instant disclosure deals with a method and a controller for configuring a site such as a building. Devices are selected from sensor devices, appliances and controller devices. Descriptor data are produced for such devices. The descriptor data can, by way of non-limiting examples, comprise data about protocols to be used by such devices and/or about addresses to be configured. The descriptor data can also provide data and/or information about the extent to which such devices can be controlled. The descriptor data can further provide data and/or information about control modes. Suitable controllers are selected based on relationships between the sensor devices and the appliance devices. These relationships

An ontology database is employed to derive such relationships from the descriptor data associated with the devices.

The present disclosure alleviates configuration and commissioning of sites since an ontology database determines relationships between devices to be configured. The ontology database is applied to descriptors of devices and determines whether and how two devices can connect. It follows that relationships and/or links between devices can, at least, be preselected based on the ontology database.

An ontology database can be employed in full or in part to perform configuration and/or commissioning. That is, a set of rules such as semantic json or xml rules can be applied in full or in part to device descriptors to determine and/or suggest relationships between devices.

Generation of descriptor data ideally involves a device database. In other words, a device descriptor is selected from a device database for a given device. The device database can, by way of non-limiting example, be a list of devices, the list specifying ports and/or addresses and/or control modes to be employed.

In an embodiment, the relationships and/or the links are additionally determined using a building information model of a site. The building information model can also be a building information model of a commercial and/or industrial and/or residential building. It is envisaged that the building information model and the ontology database determine the relationships and/or the links between the devices. It is also envisaged that an application of the building information model to an ontology database results in an extended ontology database. The extended ontology database can then be leveraged in full or in part to perform configuration and/or commissioning.

Configuration and/or commissioning can thereafter be used by the sensor devices and/or appliances and/or control devices in operation. To that end, configuration data are advantageously transmitted to the devices using a digital bus and a digital protocol. The configuration data are applied to these devices and either by a configuration controller and/or by the devices themselves.

### Brief description of the drawings

Various features will become apparent to those skilled in the art from the following detailed description of the disclosed non-limiting embodiments. The drawings that accompany the detailed description can be briefly described as follows:
FIG 1 schematically illustrates a device list.
FIG 2 shows a configuration controller.
FIG 3 schematically shows a memory storing an ontology database.
FIG 4 schematically illustrates configuration of various devices of a building.

### Detailed description

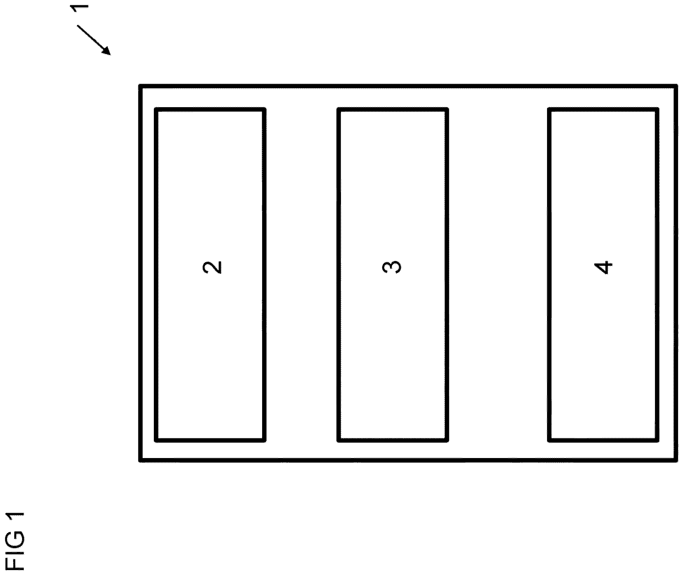

FIG 1 illustrates a device list 1. The device list 1 comprises at least one list of appliances 2 and/or at least one list of sensors 3 and/or at least one list of controllers 4. The at least one list of appliances and/or field devices 2 can include at least one of
- a heating coil and/or
- a cooling coil and/or
- a compressor and/or
- an evaporator and/or
- window blinds and/or
- a radiator and/or
- an expansion valve and/or
- an electromagnetic valve and/or
- a pressure-independent control valve and/or
- a lamp and/or
- a chilled beam, etc.

The at least one list of sensors 3 can include at least one of
- a temperature sensor and/or
- a humidity sensor and/or
- a pressure sensor and/or
- a luminosity sensor and/or
- an infrared light sensor and/or
- a sensor for volatile organic compounds and/or
- a sensor for carbon dioxide and/or
- a noise sensor and/or
- a camera such as an infrared camera, etc.

The at least one list of sensors 3 can comprise at least one nonconventional sensor such as a temperature sensor installed inside a smoke detector. The primary purpose of the smoke detector is not to sense temperature. Yet, a smoke detector can deliver data indicative of smoke along with data indicative of temperature. Likewise, a television apparatus can provide an infrared sensor. The primary purpose of a television apparatus is not to sense infrared light. Yet, a television apparatus such as a smart television apparatus can deliver data indicative of television signals along with data indicative of infrared light. The infrared sensor installed inside a television apparatus thus becomes a nonconventional sensor.

At least one list of controllers 4 can also be part of the device list 1. The at least one list of controllers 4 can comprise
- a proportional controller and/or
- a proportional and integral controller and/or
- a proportional and integral and derivative controller and/or
- a neural network controller and/or
- a fuzzy logic controller and/or
- a Bayesian controller and/or
- any of the above controllers, wherein the controller is an isolated process executed by a remote controller such as a cloud computer,
- a local controller comprising a microprocessor and/or a microcomputer, wherein the microprocessor and/or the microcontroller implements any of the above proportional, proportional and integral, proportional and integral and derivative, neural network, fuzzy logic, Bayesian controllers,
- a controller implemented by a (stochastic) quantum computer, etc.

In an advantageous embodiment, the controller is or comprises an inexpensive, low-power system on a chip microcontroller having integrated wireless connectivity. In a special embodiment, the chip microcontroller has a memory not exceeding one mebibyte.

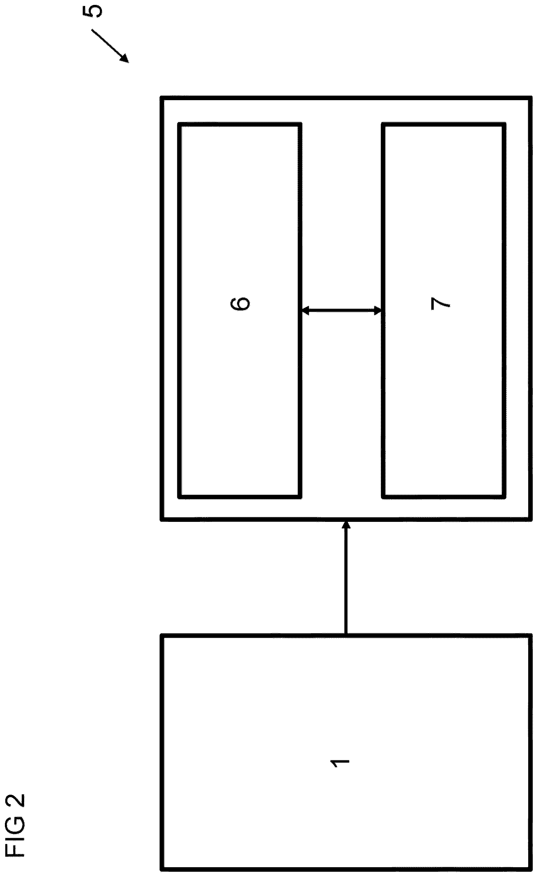

The device list 1 is read and processed by a configuration controller 5 as indicated in FIG 2. The configuration controller 5 advantageously comprises an arithmetic logic unit 6. The configuration controller 5 advantageously also comprises a memory 7 such as a non-volatile memory. The arithmetic logic unit 6 ideally is in operative communication with the memory 7.

It is envisaged that the configuration controller 5 reads the device list 1 and stores a copy thereof in its memory 7. To that end, the configuration controller 5 has write access to the memory 7. The configuration controller 5 can preferably also read data such as data indicative of the above lists 1 - 4 from the memory 7.

A connection between the configuration controller 5 and a medium storing the device list 1 can be bidirectional. A bidirectional connection affords flexibility. A connection between the configuration controller 5 and the medium storing the device list 1 can also be unidirectional. More specifically, the connection between the configuration controller 5 and the medium storing the device list 1 can be directed from the device list 1 to the configuration controller 5.

A unidirectional connection reduces complexity.

In an embodiment, the memory 7 stores data indicative of a building information model (BIM). The building information model can, by way of non-limiting example, be a building information model of the site and/or a building information model of the building. The building information can, by way of non-limiting example, be a building information model of the commercial and/or residential and/or industrial building.

It is envisaged that the configuration controller 5 and/or the arithmetic logic unit 6 can read the data indicative of a building information model from the memory 7. It is also envisaged that the controller 5 reads the data indicative of a building information model from an external computer-readable medium.

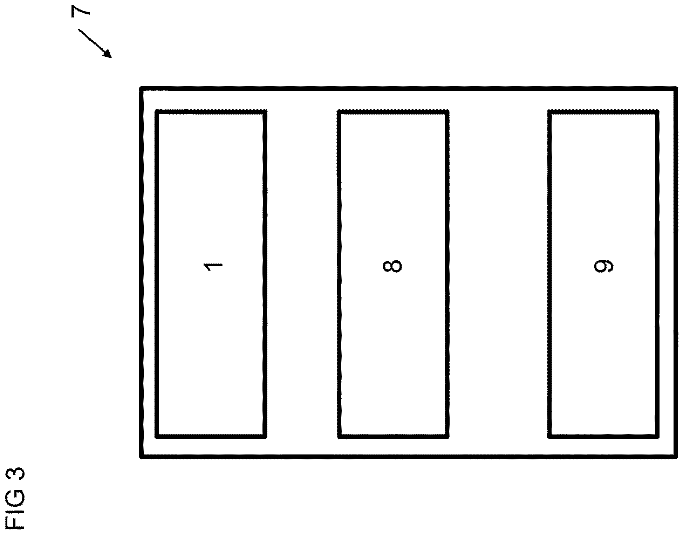

FIG 3 shows a memory 7 storing a device list 1 and/or data indicative of a building information model 8 and/or data indicative of an ontology database 9. The ontology database provides a set of rules such as a set of semantic rules. These rules describe relationships between the various devices of a commercial and/or residential and/or industrial building. The ontology database 9 can advantageously be stored in an extensible markup language (.xml) format and/or in a javascript object notation (.json) format.

It is envisaged that the configuration controller 5 and/or the arithmetic logic unit 6 can read the data indicative of an ontology database 9 from the memory 7. It is also envisaged that the controller 5 can read the data indicative of an ontology database 9 from an external computer-readable medium. The configuration controller 5 and/or the arithmetic logic unit 6 can preferably apply one or more of the rules of the ontology database 9 to devices on the device list 1. In an embodiment, the configuration controller 5 and/or the arithmetic logic unit 6 can conflate rules provided by the ontology database 9 and the building information model 8. The configuration controller 5 and/or the arithmetic logic unit 6 can then apply such conflated rules to one or more devices on the device list 7.

The ontology database 9 preferably comprises an electronic database comprising data that are systematically or methodically arranged and can be individually accessed. The ontology database 9 ideally is an electronic database comprising data that are systematically or methodically arranged and can be individually accessed.

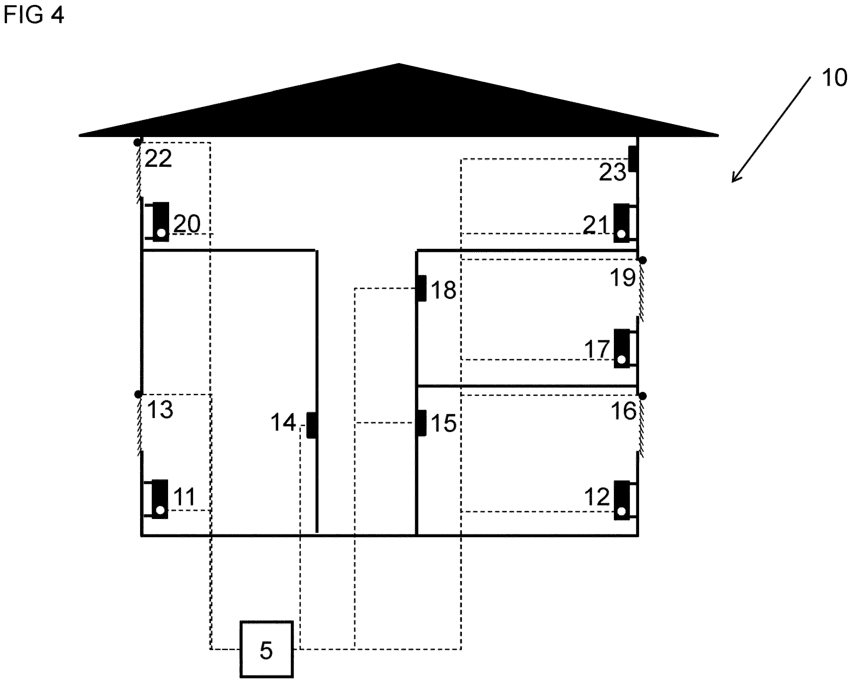

Now turning to FIG 4, the configuration as previously determined can be applied to various devices 11 - 23 within a building 10. To that end, the configuration controller 5 needs to connect to the various devices 11 - 23. A connection between the configuration controller 5 and the devices 11 - 23 can be bidirectional. A bidirectional connection affords flexibility. A connection between the configuration controller 5 and the medium storing the devices 11 - 23 can also be unidirectional. More specifically, the connection between the configuration controller 5 and the devices 11 - 23 can be directed from the configuration controller 5 to one of the devices 11 - 23. In a special embodiment, the configuration controller 5 connects to each device 11 - 23 via such a unidirectional connection. A unidirectional connection reduces complexity.

Any steps of a method according to the present disclosure can be embodied in hardware and/or in a software module executed by a processor and/or in a software module executed by a processor inside a container using operating system level virtualisation and/or in a cloud computing arrangement, or in a combination thereof. The software may include a firmware and/or a hardware driver run by the operating system and/or or an application program. Thus, the disclosure also relates to a computer program product for performing the operations presented herein. If implemented in software, the functions described may be stored as one or more instructions on a computer-readable medium. Some examples of storage media that can be used include random access memory (RAM) and/or read only memory (ROM) and/or flash memory and/or EPROM memory and/or EEPROM memory and/or registers and/or a hard disk and/or a removable disk and/or other optical disks and/or or any available media that can be accessed by a computer or any other IT equipment and appliance.

As described in detail herein, the instant disclosure deals with a method of configuring a site, the site comprising a plurality of devices (11 - 23), the plurality of devices (11 - 23) comprising a plurality of site controllers and a plurality of sensors and a plurality of appliances, the method comprising the steps of:
selecting a first device (11 - 23) from the plurality of appliances and/or from the plurality of sensors;
producing first descriptor data for the first device (11 - 23);
selecting a second device (11 - 23) from the plurality of appliances and/or from the plurality of sensors;
producing second descriptor data for the second device (11 - 23);
loading data indicative of an ontology database (9), the ontology database comprising a set of rules;
producing relationship data by applying at least one of the rules of the set of rules of the ontology database to the first descriptor data and to the second descriptor data;
selecting a third device (11 - 23) from the plurality of site controllers based on the relationship data;
producing a first set of configuration data based on the relationship data;
producing a second set of configuration data based on the relationship data;
producing a third set of configuration data based on the relationship data;
transmitting the first set of configuration data to the first device (11 - 23);
transmitting the second set of configuration data to the second device (11 - 23);
transmitting the third set of configuration data to the third device (11 - 23);
applying the first set of configuration data to the first device (11 - 23);
applying the second set of configuration data to the second device (11 - 23); and
applying the third set of configuration data to the third device (11 - 23).

The present disclosure also deals with a method of configuring a site, the site comprising a plurality of devices (11 - 23), the plurality of devices (11 - 23) comprising a plurality of site controllers and a plurality of sensors and a plurality of appliances, the method comprising the steps of:
selecting a first device (11 - 23) from the plurality of appliances and/or from the plurality of sensors;
loading a device database, the device database comprising descriptor data for the plurality of appliances and/or for the plurality of sensors;
using the device database to produce first descriptor data for the first device (11 - 23);
selecting a second device (11 - 23) from the plurality of appliances and/or from the plurality of sensors;
using the device database to produce second descriptor data for the second device (11 - 23);
loading an ontology database comprising a set of rules applicable to the first device (11 - 23) and to the second device (11 - 23);
producing relationship data indicative of a relationship between the first device (11 - 23) and the second device (11 - 23) by applying at least one of the rules of the set of rules of the ontology database to the first descriptor data and to the second descriptor data;
selecting a third device (11 - 23) from the plurality of site controllers based on the relationship between the first device (11 - 23) and/or the second device (11 - 23) as indicated by the relationship data;
producing a first set of configuration data based on the relationship between the first device (11 - 23) and/or the second device (11 - 23) as indicated by the relationship data;
producing a second set of configuration data based on the relationship between the first device (11 - 23) and/or the second device (11 - 23) as indicated by the relationship data;
producing a third set of configuration data based on the relationship between the first device (11 - 23) and/or the second device (11 - 23) as indicated by the relationship data;
transmitting the first set of configuration data to the first device (11 - 23);
transmitting the second set of configuration data to the second device (11 - 23);
transmitting the third set of configuration data to the third device (11 - 23);
applying the first set of configuration data to the first device (11 - 23);
applying the second set of configuration data to the second device (11 - 23); and
applying the third set of configuration data to the third device (11 - 23).

The method of configuring a site advantageously is a method of configuring a plurality of devices (11 - 23) of a site.

The first descriptor data preferably describes one or more intrinsic properties of the first device (11 - 23). The one or more intrinsic properties can, by way of example, comprise at least one of:
- a rated power of the first device (11 - 23);
- a range of operating temperatures of the first device (11 - 23);
- an indication whether the first device (11 - 23) is battery powered;
- a digital or analog communication protocol to be used with the first device (11 - 23);
- a serial number of the first device (11 - 23);
- a type of a physical communication interface of the first device (11 - 23).

The first descriptor data advantageously describes one or more technical properties of the first device (11 - 23). The one or more technical properties can, by way of example, comprise at least one of:
- a rated power of the first device (11 - 23);
- a range of operating temperatures of the first device (11 - 23);
- an indication whether the first device (11 - 23) is battery powered;
- a digital or analog communication protocol to be used with the first device (11 - 23);
- a type of a physical communication interface of the first device (11 - 23).

The second descriptor data preferably describes one or more intrinsic properties of the second device (11 - 23). The one or more intrinsic properties can, by way of example, comprise at least one of:
- a rated power of the second device (11 - 23);
- a range of operating temperatures of the second device (11 - 23);
- an indication whether the second device (11 - 23) is battery powered;
- a digital or analog communication protocol to be used with the second device (11 - 23);
- a serial number of the second device (11 - 23);
- a type of a physical communication interface of the second device (11 - 23).

The second descriptor data advantageously describes one or more technical properties of the second device (11 - 23). The one or more technical properties can, by way of example, comprise at least one of:
- a rated power of the second device (11 - 23);
- a range of operating temperatures of the second device (11 - 23);
- an indication whether the second device (11 - 23) is battery powered;
- a digital or analog communication protocol to be used with the second device (11 - 23);
- a type of a physical communication interface of the second device (11 - 23).

The instant disclosure also deals with any of the aforementioned methods, the method comprising the step of:
loading a device database, the device database comprising descriptor data for the plurality of appliances and for the plurality of sensors.

The present disclosure further deals with any of the aforementioned methods, the method comprising the step of:
loading a device database, the device database comprising descriptor data for the plurality of appliances and for the plurality of sensors and for the plurality of site controllers.

The instant disclosure still deals with any of the aforementioned methods, the method comprising the steps of:
producing relationship data indicative of a technical relationship between the first device (11 - 23) and the second device (11 - 23) by applying at least one of the rules of the set of rules of the ontology database to the first descriptor data and to the second descriptor data;
selecting a third device (11 - 23) from the plurality of site controllers based on the technical relationship between the first device (11 - 23) and/or the second device (11 - 23) as indicated by the relationship data;
producing a first set of configuration data based on the technical relationship between the first device (11 - 23) and/or the second device (11 - 23) as indicated by the relationship data;
producing a second set of configuration data based on the technical relationship between the first device (11 - 23) and/or the second device (11 - 23) as indicated by the relationship data; and
producing a third set of configuration data based on the technical relationship between the first device (11 - 23) and/or the second device (11 - 23) as indicated by the relationship data.

According to an aspect of the present disclosure, the site is a building (10) such as a commercial and/or residential and/or industrial building. According to a related aspect of the present disclosure, the site comprises a building (10) such as a commercial and/or residential and/or industrial building.

The ontology database preferably comprises a set of semantic rules applicable to the first device (11 - 23) and to the second first device (11 - 23). The ontology database ideally comprises a set of semantic rules specifically applicable to the first device (11 - 23) and to the second first device (11 - 23). It is envisaged that the ontology database comprises a set of semantic rules applicable to the third device (11 - 23). It is still envisaged that the ontology database comprises a set of semantic rules specifically applicable to the third device (11 - 23).

It is envisaged that the ontology database comprises a plurality of semantic rules and that the relationship data are produced by applying at least one of the semantic rules of the set of semantic rules of the ontology database to the first descriptor data and to the second descriptor data.

The instant disclosure also deals with any of the aforementioned methods, the method comprising the step of:
loading an ontology database comprising a set of semantic rules applicable to the first device (11 - 23) and to the second device (11 - 23).

The present disclosure further deals with any of the aforementioned methods, the method comprising the step of:
loading an ontology database comprising a set of rules specifically applicable to the first device (11 - 23) and to the second device (11 - 23).

The instant disclosure still deals with any of the aforementioned methods, the method comprising the step of:
loading an ontology database comprising a set of semantic rules specifically applicable to the first device (11 - 23) and to the second device (11 - 23).

The instant disclosure also deals with any of the aforementioned methods, the method comprising the step of:
loading an ontology database comprising a set of semantic rules applicable to the first descriptor data and to the second descriptor data.

The present disclosure further deals with any of the aforementioned methods, the method comprising the step of:
loading an ontology database comprising a set of rules specifically applicable to the first descriptor data and to the second descriptor data.

The instant disclosure still deals with any of the aforementioned methods, the method comprising the step of:
loading an ontology database comprising a set of semantic rules specifically applicable to the first descriptor data and to the second descriptor data.

In an embodiment, the set of rules of the ontology database comprises two or more rules. The set of rules of the ontology database advantageously comprises three or more rules. The set of rules of the ontology database ideally comprises four or more rules. In a special embodiment, the set of rules of the ontology database comprises two or more semantic rules. The set of rules of the ontology database advantageously comprises three or more semantic rules. The set of rules of the ontology database ideally comprises four or more semantic rules.

The present disclosure also deals with any of the methods described herein, the method comprising the steps of:
loading data indicative of an ontology database (9), the ontology database comprising a set of rules; and
producing the ontology database comprising the set of rules from the data indicative of the ontology database (9).

The instant disclosure further deals with any of the methods described herein, the method comprising the steps of:
loading data indicative of an ontology database (9), the ontology database comprising a set of semantic rules; and
producing the ontology database comprising the set of semantic rules from the data indicative of the ontology database (9).

The present disclosure still deals with any of the methods described herein, the method comprising the steps of:
loading data indicative of an ontology database (9), the ontology database comprising a set of rules; and
producing the set of rules of the ontology database from the data indicative of the ontology database (9).

The instant disclosure still further deals with any of the methods described herein, the method comprising the steps of:
loading data indicative of an ontology database (9), the ontology database comprising a set of semantic rules; and
producing the set of semantic rules of the ontology database from the data indicative of the ontology database (9).

The present disclosure yet further deals with any of the methods described herein, the method comprising the step of:
loading an ontology database comprising a set of rules.

The instant disclosure also deals with any of the methods described herein, the method comprising the step of:
loading an ontology database comprising a set of semantic rules.

The present disclosure further deals with any of the methods described herein, the method comprising the step of:
transmitting the first set of configuration data to the first device (11 - 23) using a digital communication bus.

The instant disclosure still further deals with any of the methods described herein, the method comprising the step of:
transmitting the second set of configuration data to the second device (11 - 23) using a digital communication bus.

The present disclosure yet further deals with any of the methods described herein, the method comprising the step of:
transmitting the third set of configuration data to the third device (11 - 23) using a digital communication bus.

In an embodiment, the digital communication bus is a wireless, digital communication bus. It is also envisaged that the digital communication bus comprises a wireless, digital communication bus. In an alternate embodiment, the digital communication bus is a hardwired, digital communication bus. It is also envisaged that the digital communication bus comprises a hardwired, digital communication bus. A wireless communication bus affords flexibility since no devices (11 - 23) need be plugged in. A hardwired communication bus can enable parallel transmissions of data and of power.

The instant disclosure also deals with any of the methods described herein, the method comprising the step of:
transmitting the first set of configuration data to the first device (11 - 23) using a digital communication protocol.

The present disclosure further deals with any of the methods described herein, the method comprising the step of:
transmitting the second set of configuration data to the second device (11 - 23) using a digital communication protocol.

The instant disclosure still deals with any of the methods described herein, the method comprising the step of:
transmitting the third set of configuration data to the third device (11 - 23) using a digital communication protocol.

In an embodiment, the digital communication protocol is a connectionless, digital communication protocol. It is also envisaged that the digital communication protocol comprises a connectionless, digital communication protocol. In an alternate embodiment, the digital communication protocol is a connection-oriented, digital communication protocol. It is also envisaged that the digital communication protocol comprises a connection-oriented, digital communication protocol. Connectionless protocols confer advantages in terms of fast transmission rates. Connection-oriented protocols afford reliable communication.

The relationship data are advantageously indicative of a relationship between the first device (11 - 23) and/or the second device (11 - 23) and/or the third device (11 - 23). The relationship data are advantageously indicative of a technical relationship between the first device (11 - 23) and/or the second device (11 - 23) and/or the third device (11 - 23). The technical between the first device (11 - 23) and/or the second device (11 - 23) and/or the third device (11 - 23) can, by way of example, indicate technical compatibility between the first device (11 - 23) and/or the second device (11 - 23) and/or the third device (11 - 23). The technical between the first device (11 - 23) and/or the second device (11 - 23) and/or the third device (11 - 23) can, by way of another example, also indicate technical incompatibility between the first device (11 - 23) and/or the second device (11 - 23) and/or the third device (11 - 23). The relationship data can, by way of non-limiting examples, indicate compatible ports of the first device (11 - 23) and of the second device (11 - 23) and/or compatible ports of the second device (11 - 23) and of the third device (11 - 23) and/or compatible ports of the third device (11 - 23) and of the first device (11 - 23). The relationship data can also, by way of non-limiting examples, indicate common communication protocols of the first device (11 - 23) and of the second device (11 - 23) and/or common communication protocols of the second device (11 - 23) and of the third device (11 - 23) and/or common communication protocols of the third device (11 - 23) and of the first device (11 - 23).

The present disclosure also deals with any of the methods described herein, the method comprising the steps of:
selecting the first device (11 - 23) from the plurality of appliances;
producing a first set of appliance configuration data based on the relationship data;
transmitting the first set of appliance configuration data to the first device (11 - 23); and
applying the first set of appliance configuration data to the first device (11 - 23), the first device (11 - 23) thereafter using the first set of appliance configuration data in operation of the first device (11 - 23).

The instant disclosure further deals with any of the methods described herein, the method comprising the steps of:
selecting the first device (11 - 23) from the plurality of appliances;
producing a first set of appliance configuration data based on the relationship between the first device (11 - 23) and/or the second device (11 - 23) as indicated by the relationship data;
transmitting the first set of appliance configuration data to the first device (11 - 23); and
applying the first set of appliance configuration data to the first device (11 - 23), the first device (11 - 23) thereafter using the first set of appliance configuration data in operation of the first device (11 - 23).

The present disclosure also deals with any of the methods described herein, the method comprising the steps of:
selecting the second device (11 - 23) from the plurality of sensors;
producing a second set of sensor configuration data based on the relationship data;
transmitting the second set of sensor configuration data to the second device (11 - 23); and
applying the second set of sensor configuration data to the second device (11 - 23), the second device (11 - 23) thereafter using the second set of sensor configuration data in operation of the second device (11 - 23).

The instant disclosure further deals with any of the methods described herein, the method comprising the steps of:
selecting the second device (11 - 23) from the plurality of sensors;
producing a second set of sensor configuration data based on the relationship between the first device (11 - 23) and/or the second device (11 - 23) as indicated by the relationship data;
transmitting the second set of sensor configuration data to the second device (11 - 23); and
applying the second set of sensor configuration data to the second device (11 - 23), the second device (11 - 23) thereafter using the second set of sensor configuration data in operation of the second device (11 - 23).

The present disclosure also deals with any of the methods described herein, the method comprising the steps of:
producing a third set of controller configuration data based on the relationship data;
transmitting the third set of controller configuration data to the third device (11 - 23); and
applying the third set of controller configuration data to the third device (11 - 23), the third device (11 - 23) thereafter using the third set of controller configuration data in operation of the third device (11 - 23).

The present disclosure also deals with any of the methods described herein, the method comprising the step of:
producing the first set of configuration data based on the relationship data and based on the first descriptor data.

The instant disclosure further deals with any of the methods described herein, the method comprising the step of:
producing the first set of configuration data based on the relationship between the first device (11 - 23) and/or the second device (11 - 23) as indicated by the relationship data and based on the first descriptor data.

The instant disclosure further deals with any of the methods described herein, the method comprising the step of:
producing the second set of configuration data based on the relationship data and based on the second descriptor data.

The instant disclosure still deals with any of the methods described herein, the method comprising the step of:
producing the first set of configuration data based on the based on the relationship between the first device (11 - 23) and/or the second device (11 - 23) as indicated by the relationship data and based on the first descriptor data and based on the second descriptor data.

The present disclosure still further deals with any of the methods described herein, the method comprising the steps of:
producing third descriptor data for the third device (11 - 23); and
producing the third set of configuration data based on the relationship data and based on the third descriptor data.

The third descriptor data preferably describes one or more intrinsic properties of the third device (11 - 23). The one or more intrinsic properties can, by way of example, comprise at least one of:
- a rated power of the third device (11 - 23);
- a range of operating temperatures of the third device (11 - 23);
- an indication whether the third device (11 - 23) is battery powered;
- a digital or analog communication protocol to be used with the third device (11 - 23);
- a serial number of the third device (11 - 23);
- a type of a physical communication interface of the third device (11 - 23).

The third descriptor data advantageously describes one or more technical properties of the third device (11 - 23). The one or more technical properties can, by way of example, comprise at least one of:
- a rated power of the third device (11 - 23);
- a range of operating temperatures of the third device (11 - 23);
- an indication whether the third device (11 - 23) is battery powered;
- a digital or analog communication protocol to be used with the third device (11 - 23);
- a type of a physical communication interface of the third device (11 - 23).

The present disclosure also deals with any of the methods described herein, the method comprising the step of:
producing the first set of configuration data based on the relationship data and based on the first descriptor data and based on the second descriptor data.

The instant disclosure still deals with any of the methods described herein, the method comprising the step of:
producing the second set of configuration data based on the relationship data and based on the first descriptor data and based on the second descriptor data.

The present disclosure also deals with any of the methods described herein, the method comprising the steps of:
producing third descriptor data for the third device (11 - 23); and
producing the first set of configuration data based on the relationship data and based on the first descriptor data and based on the second descriptor data and based on the third descriptor data.

The instant disclosure further deals with any of the methods described herein, the method comprising the steps of:
producing third descriptor data for the third device (11 - 23); and
producing the second set of configuration data based on the relationship data and based on the first descriptor data and based on the second descriptor data and based on the third descriptor data.

The present disclosure still further deals with any of the methods described herein, the method comprising the steps of:
producing third descriptor data for the third device (11 - 23); and
producing the third set of configuration data based on the relationship data and based on the first descriptor data and based on the second descriptor data and based on the third descriptor data.

The present disclosure also deals with any of the methods described herein, the method comprising the step of:
using the device database to produce the first descriptor data for the first device (11 - 23).

The instant disclosure yet further deals with any of the methods described herein, the method comprising the step of:
using the device database to produce the second descriptor data for the second device (11 - 23).

The present disclosure also deals with any of the methods described herein, the method comprising the step of:
using the device database to produce third descriptor data for the third device (11 - 23).

The present disclosure also deals with any of the methods described herein and involving third descriptor data, the method comprising the step of:
using the device database to produce the third descriptor data for the third device (11 - 23).

The instant disclosure further deals with any of the methods described herein, the method comprising the step of:
using the device database to select the first descriptor data for the first device (11 - 23) from the device database.

The present disclosure still further deals with any of the methods described herein, the method comprising the step of:
using the device database to select the second descriptor data for the second device (11 - 23) from the device database.

The instant disclosure yet further any of the methods described herein, the method comprising the step of:
using the device database to select third descriptor data for the third device (11 - 23) from the device database.

The present disclosure also deals with any of the methods described herein and involving third descriptor data, the method comprising the step of:
using the device database to select the third descriptor data for the third device (11 - 23) from the device database.

The device database preferably comprises an electronic database comprising data that are systematically or methodically arranged and can be individually accessed. The device database advantageously is an electronic database comprising data that are systematically or methodically arranged and can be individually accessed. In an embodiment, the device database comprises an electronic database comprising device data that are systematically or methodically arranged and can be individually accessed. In a special embodiment, the device database is an electronic database comprising device data that are systematically or methodically arranged and can be individually accessed.

The present disclosure also deals with any of the methods described herein, the method comprising the step of:
producing the relationship data by applying two or more of the rules of the set of rules of the ontology database to the first descriptor data and to the second descriptor data.

The instant disclosure further deals with any of the methods described herein, the method comprising the step of:
producing the relationship data indicative of a relationship between the first device (11 - 23) and the second device (11 - 23) by applying two or more of the rules of the set of rules of the ontology database to the first descriptor data and to the second descriptor data.

The instant disclosure further deals with any of the methods described herein, the method comprising the step of:
producing the relationship data by applying all the rules of the set of rules of the ontology database to the first descriptor data and to the second descriptor data.

The present disclosure still deals with any of the methods described herein, the method comprising the step of:
producing the relationship data by applying the full set of rules of the ontology database to the first descriptor data and to the second descriptor data.

The instant disclosure further deals with any of the methods described herein and involving an ontology database comprising a set of semantic rules, the method comprising the step of:
producing the relationship data by applying two or more of the semantic rules of the set of semantic rules of the ontology database to the first descriptor data and to the second descriptor data.

The present disclosure still further deals with any of the methods described herein and involving an ontology database comprising a set of semantic rules, the method comprising the step of:
producing the relationship data by applying all the semantic rules of the set of semantic rules of the ontology database to the first descriptor data and to the second descriptor data.

The instant disclosure yet further deals with any of the methods described herein and involving an ontology database comprising a set of semantic rules, the method comprising the step of:
producing the relationship data by applying the full set of semantic rules of the ontology database to the first descriptor data and to the second descriptor data.

The present disclosure also deals with any of the methods described herein, the method comprising the steps of:
loading data indicative of a building information model (8) of the site;
producing the building information model of the site from the data indicative of the building information model (8) of the site; and
producing the relationship data by applying the building information model of the site and at least one of the rules of the set of rules of the ontology database to the first descriptor data and to the second descriptor data.

The instant disclosure further deals with any of the methods described herein, the method comprising the steps of:
loading data indicative of a building information model (8) of the site;
producing the building information model of the site from the data indicative of the building information model (8) of the site; and
producing the relationship data indicative of a relationship between the first device (11 - 23) and the second device (11 - 23) by applying the building information model of the site and at least one of the rules of the set of rules of the ontology database to the first descriptor data and to the second descriptor data.

The data indicative of a building information model (8) of the site preferably follow at least one of the standards:
- National Building Information Modeling Standard for the United States of America, published on 18 December 2007, version 2 and/or
- National Building Information Modeling Standard for the United States of America, published in 2015, version 3 and/or
- BIM-reference for Germany, file reference 10.08.17.7-12.08, published in 2013 and/or
- British Standard 8536-2:2016 and/or
- ONORM A 6241-2:2015.

The building information model of the site advantageously follows at least one of the standards:
- National Building Information Modeling Standard for the United States of America, published on 18 December 2007, version 2 and/or
- National Building Information Modeling Standard for the United States of America, published in 2015, version 3 and/or
- BIM-reference for Germany, file reference 10.08.17.7-12.08, published in 2013 and/or
- British Standard 8536-2:2016 and/or
- ONORM A 6241-2:2015.

The instant disclosure also deals with any of the methods described herein, the method comprising the steps of:
loading data indicative of a building information model (8) of the site;
producing the building information model of the site from the data indicative of the building information model (8) of the site; and
producing the relationship data by applying the building information model of the site and two or more of the rules of the set of rules of the ontology database to the first descriptor data and to the second descriptor data.

The present disclosure further deals with any of the methods described herein, the method comprising the steps of:
loading data indicative of a building information model (8) of the site;
producing the building information model of the site from the data indicative of the building information model (8) of the site; and
producing the relationship data by applying the building information model of the site and all the rules of the ontology database to the first descriptor data and to the second descriptor data.

The present disclosure still further deals with any of the methods described herein, the method comprising the steps of:
loading data indicative of a building information model (8) of the site;
producing the building information model of the site from the data indicative of the building information model (8) of the site; and
producing the relationship data by applying the building information model of the site and the full set of rules of the ontology database to the first descriptor data and to the second descriptor data.

The instant disclosure still deals with any of the methods described herein and involving an ontology database comprising a set of semantic rules, the method comprising the steps of:
loading data indicative of a building information model (8) of the site;
producing the building information model of the site from the data indicative of the building information model (8) of the site; and
producing the relationship data by applying the building information model of the site and at least one of the semantic rules of the ontology database to the first descriptor data and to the second descriptor data.

The present disclosure further deals with any of the methods described herein and involving an ontology database comprising a set of semantic rules, the method comprising the steps of:
loading data indicative of a building information model (8) of the site;
producing the building information model of the site from the data indicative of the building information model (8) of the site; and
producing the relationship data by applying the building information model of the site and two or more of the semantic rules of the ontology database to the first descriptor data and to the second descriptor data.

The instant disclosure still further deals with any of the methods described herein and involving an ontology database comprising a set of semantic rules, the method comprising the steps of:
loading data indicative of a building information model (8) of the site;
producing the building information model of the site from the data indicative of the building information model (8) of the site; and
producing the relationship data by applying the building information model of the site and all the semantic rules of the set of semantic rules of the ontology database to the first descriptor data and to the second descriptor data.

The present disclosure yet further deals with any of the methods described herein and involving an ontology database comprising a set of semantic rules, the method comprising the steps of:
loading data indicative of a building information model (8) of the site;
producing the building information model of the site from the data indicative of the building information model (8) of the site; and
producing the relationship data by applying the building information model of the site and the full set of semantic rules of the ontology database to the first descriptor data and to the second descriptor data.

The present disclosure also deals with any of the methods described herein, the method comprising the steps of:
loading data indicative of a building information model (8) of the site;
producing the building information model of the site from the data indicative of the building information model (8) of the site;
producing an extended ontology database comprising a set of rules by merging the ontology database and the building information model of the site; and
producing the relationship data by applying at least one of the rules of the set of rules of the extended ontology database to the first descriptor data and to the second descriptor data.

The instant disclosure further deals with any of the methods described herein, the method comprising the steps of:
loading data indicative of a building information model (8) of the site;
producing the building information model of the site from the data indicative of the building information model (8) of the site;
producing an extended ontology database comprising a set of rules by merging the ontology database and the building information model of the site; and
producing the relationship data indicative of a relationship between the first device (11 - 23) and the second device (11 - 23) by applying at least one of the rules of the set of rules of the extended ontology database to the first descriptor data and to the second descriptor data.

The building information model of the site preferably is a building information model of a building (10). The building information model of the site advantageously is a building information model of a commercial and/or residential and/or industrial building.

In an embodiment, the set of rules of the extended ontology database comprises two or more rules. The set of rules of the extended ontology database advantageously comprises three or more rules. The set of rules of the extended ontology database ideally comprises four or more rules. In a special embodiment, the set of rules of the extended ontology database comprises two or more semantic rules. The set of rules of the extended ontology database advantageously comprises three or more semantic rules. The set of rules of the extended ontology database ideally comprises four or more semantic rules.

The extended ontology database preferably comprises an electronic database comprising data that are systematically or methodically arranged and can be individually accessed. The extended ontology database ideally is an electronic database comprising data that are systematically or methodically arranged and can be individually accessed.

The present disclosure also deals with any of the methods described herein, the method comprising the steps of:
loading data indicative of a building information model (8) of the site;
producing the building information model of the site from the data indicative of the building information model (8) of the site;
producing an extended ontology database comprising a set of rules by merging the ontology database and the building information model of the site; and
producing the relationship data by applying two or more of the rules of the set of rules of the extended ontology database to the first descriptor data and to the second descriptor data.

The instant disclosure further deals with any of the methods described herein, the method comprising the steps of:
loading data indicative of a building information model (8) of the site;
producing the building information model of the site from the data indicative of the building information model (8) of the site;
producing an extended ontology database comprising a set of rules by merging the ontology database and the building information model of the site; and
producing the relationship data by applying all the rules of the set of rules of the extended ontology database to the first descriptor data and to the second descriptor data.

The present disclosure still further deals with any of the methods described herein, the method comprising the steps of:
loading data indicative of a building information model (8) of the site;
producing the building information model of the site from the data indicative of the building information model (8) of the site;
producing an extended ontology database comprising a set of rules by merging the ontology database and the building information model of the site; and
producing the relationship data by applying the full set of rules of the extended ontology database to the first descriptor data and to the second descriptor data.

The instant disclosure still deals with any of the methods described herein and involving an ontology database comprising a set of semantic rules, the method comprising the steps of:
loading data indicative of a building information model (8) of the site;
producing the building information model of the site from the data indicative of the building information model (8) of the site;
producing an extended ontology database comprising a set of semantic rules by merging the ontology database and the building information model of the site; and
producing the relationship data by applying at least one of the semantic rules of the set of semantic rules of the extended ontology database to the first descriptor data and to the second descriptor data.

The present disclosure yet further deals with any of the methods described herein and involving an ontology database comprising a set of semantic rules, the method comprising the steps of:
loading data indicative of a building information model (8) of the site;
producing the building information model of the site from the data indicative of the building information model (8) of the site;
producing an extended ontology database comprising a set of semantic rules by merging the ontology database and the building information model of the site; and
producing the relationship data by applying two or more of the semantic rules of the set of semantic rules of the extended ontology database to the first descriptor data and to the second descriptor data.

The instant disclosure also deals with any of the methods described herein and involving an ontology database comprising a set of semantic rules, the method comprising the steps of:
loading data indicative of a building information model (8) of the site;
producing the building information model of the site from the data indicative of the building information model (8) of the site;
producing an extended ontology database comprising a set of semantic rules by merging the ontology database and the building information model of the site; and
producing the relationship data by applying all the semantic rules of the set of semantic rules of the extended ontology database to the first descriptor data and to the second descriptor data.

The present disclosure further deals with any of the methods described herein and involving an ontology database comprising a set of semantic rules, the method comprising the steps of:
loading data indicative of a building information model (8) of the site;
producing the building information model of the site from the data indicative of the building information model (8) of the site;
producing an extended ontology database comprising a set of semantic rules by merging the ontology database and the building information model of the site; and
producing the relationship data by applying the full set of semantic rules of the extended ontology database to the first descriptor data and to the second descriptor data.

The instant disclosure also deals with any of the methods described herein, the site comprising a configuration controller (5) having a memory (7) storing the data indicative of the ontology database (9), the method comprising the steps of:
the configuration controller (5) selecting the first device (11 - 23) from the plurality of appliances and/or from the plurality of sensors;
the configuration controller (5) producing the first descriptor data for the first device (11 - 23);
the configuration controller (5) selecting the second device (11 - 23) from the plurality of appliances and/or from the plurality of sensors;
the configuration controller (5) producing the second descriptor data for the second device (11 - 23);
the configuration controller (5) loading data indicative of the ontology database (9) from the memory (7);
the configuration controller (5) producing the relationship data by applying at least one of the rules of the set of rules of the ontology database to the first descriptor data and to the second descriptor data;
the configuration controller (5) selecting the third device (11 - 23) from the plurality of site controllers based on the relationship data;
the configuration controller (5) producing the third set of configuration data based on the relationship data;
the configuration controller (5) transmitting the third set of configuration data to the third device (11 - 23) using a digital communication bus and a digital communication protocol; and
the third device (11 - 23) applying the third set of configuration data, the third device (11 - 23) thereafter using the third set of configuration data in operation of the third device (11 - 23).

The present disclosure also deals with any of the methods described herein and involving a configuration controller (5), the method comprising the step of:
the configuration controller (5) producing the relationship data by applying two or more rules of the set of rules of the ontology database to the first descriptor data and to the second descriptor data.

The instant disclosure further deals with any of the methods described herein and involving a configuration controller (5), the method comprising the step of:
the configuration controller (5) producing the relationship data by applying all the rules of the set of rules of the ontology database to the first descriptor data and to the second descriptor data.

The present disclosure still further deals with any of the methods described herein and involving a configuration controller (5), the method comprising the step of:
the configuration controller (5) producing the relationship data by applying the full set of rules of the ontology database to the first descriptor data and to the second descriptor data.

The instant disclosure still deals with any of the methods described herein and involving a configuration controller (5) and involving an ontology database comprising a set of semantic rules, the method comprising the step of:
the configuration controller (5) producing the relationship data by applying two or more semantic rules of the set of semantic rules of the ontology database to the first descriptor data and to the second descriptor data.

The present disclosure yet further deals with any of the methods described herein and involving a configuration controller (5) and involving an ontology database comprising a set of semantic rules, the method comprising the step of:
the configuration controller (5) producing the relationship data by applying all the semantic rules of the set of semantic rules of the ontology database to the first descriptor data and to the second descriptor data.

The instant disclosure also deals with any of the methods described herein and involving a configuration controller (5) and involving an ontology database comprising a set of semantic rules, the method comprising the step of:
the configuration controller (5) producing the relationship data by applying the full set of semantic rules of the ontology database to the first descriptor data and to the second descriptor data.

The instant disclosure deals with any of the methods described herein involving a configuration controller (5), wherein a memory (7) stores data indicative of the building information model (8), the method comprising the steps of:
the configuration controller (5) loading the data indicative of the building information model (8) of the site from the memory (7);
the configuration controller (5) producing the building information model of the site from the data indicative of the building information model (8) of the site; and
the configuration controller (5) producing the relationship data by applying the building information model of the site and at least one of the rules of the set of rules of the ontology database to the first descriptor data and to the second descriptor data.

The present disclosure still deals with any of the methods described herein involving a configuration controller (5), the method comprising the steps of:
the configuration controller (5) loading the data indicative of the building information model (8) of the site from the memory (7);
the configuration controller (5) producing the building information model of the site from the data indicative of the building information model (8) of the site; and
the configuration controller (5) producing the relationship data indicative of a relationship between the first device (11 - 23) and the second device (11 - 23) by applying the building information model of the site and at least one of the rules of the set of rules of the ontology database to the first descriptor data and to the second descriptor data.

The present disclosure further deals with any of the methods described herein involving a configuration controller (5), wherein a memory (7) stores data indicative of the building information model (8), the method comprising the steps of:
the configuration controller (5) loading the data indicative of the building information model (8) of the site from the memory (7);
the configuration controller (5) producing the building information model of the site from the data indicative of the building information model (8) of the site; and
the configuration controller (5) producing the relationship data by applying the building information model of the site and two or more rules of the set of rules of the ontology database to the first descriptor data and to the second descriptor data.

The instant disclosure still further deals with any of the methods described herein involving a configuration controller (5), wherein a memory (7) stores data indicative of the building information model (8), the method comprising the steps of:
the configuration controller (5) loading the data indicative of the building information model (8) of the site from the memory (7);
the configuration controller (5) producing the building information model of the site from the data indicative of the building information model (8) of the site; and
the configuration controller (5) producing the relationship data by applying the building information model of the site and all the rules of the set of rules of the ontology database to the first descriptor data and to the second descriptor data.

The present disclosure also deals with any of the methods described herein involving a configuration controller (5), wherein a memory (7) stores data indicative of the building information model (8), the method comprising the steps of:
the configuration controller (5) loading the data indicative of the building information model (8) of the site from the memory (7);
the configuration controller (5) producing the building information model of the site from the data indicative of the building information model (8) of the site; and
the configuration controller (5) producing the relationship data by applying the building information model of the site and the full set of rules of the ontology database to the first descriptor data and to the second descriptor data.

The instant disclosure still deals with any of the methods described herein, wherein a memory (7) stores data indicative of the building information model (8) and the method involves an ontology database comprising a set of semantic rules and the method involves a configuration controller (5), the method comprising the steps of:
the configuration controller (5) loading the data indicative of the building information model (8) of the site from the memory (7);
the configuration controller (5) producing the building information model of the site from the data indicative of the building information model (8) of the site; and
the configuration controller (5) producing the relationship data by applying the building information model of the site and at least one of the semantic rules of the set of semantic rules of the ontology database to the first descriptor data and to the second descriptor data.

The present disclosure yet further deals with any of the methods described herein, wherein a memory (7) stores data indicative of the building information model (8) and the method involves an ontology database comprising a set of semantic rules and the method involves a configuration controller (5), the method comprising the steps of:
the configuration controller (5) loading the data indicative of the building information model (8) of the site from the memory (7);
the configuration controller (5) producing the building information model of the site from the data indicative of the building information model (8) of the site; and
the configuration controller (5) producing the relationship data by applying the building information model of the site and two or more semantic rules of the set of semantic rules of the ontology database to the first descriptor data and to the second descriptor data.

The instant disclosure also deals with any of the methods described herein, wherein a memory (7) stores data indicative of the building information model (8) and the method involves an ontology database comprising a set of semantic rules and the method involves a configuration controller (5), the method comprising the steps of:
the configuration controller (5) loading the data indicative of the building information model (8) of the site from the memory (7);
the configuration controller (5) producing the building information model of the site from the data indicative of the building information model (8) of the site; and
the configuration controller (5) producing the relationship data by applying the building information model of the site and all the semantic rules of the set of semantic rules of the ontology database to the first descriptor data and to the second descriptor data.

The present disclosure further deals with any of the methods described herein, wherein a memory (7) stores data indicative of the building information model (8) and the method involves an ontology database comprising a set of semantic rules and the method involves a configuration controller (5), the method comprising the steps of:
the configuration controller (5) loading the data indicative of the building information model (8) of the site from the memory (7);
the configuration controller (5) producing the building information model of the site from the data indicative of the building information model (8) of the site; and
the configuration controller (5) producing the relationship data by applying the building information model of the site and the full set of sematic rules of the ontology database to the first descriptor data and to the second descriptor data.

The instant disclosure also deals with any of the methods described herein, the method comprising the steps of:
the third device (11 - 23) deriving a set of proportional and integral parameters from the third set of configuration data; and
the third device (11 - 23) thereafter using the set of proportional and integral parameters to perform site control.

The present disclosure also deals with any of the methods described herein, the method comprising the steps of:
the third device (11 - 23) deriving a set of proportional and integral and derivative parameters from the third set of configuration data; and
the third device (11 - 23) thereafter using the set of proportional and integral and derivative parameters to perform site control.

The instant disclosure further deals with any of the methods described herein, the method comprising the steps of:
the third device (11 - 23) deriving a set of proportional and integral parameters from the third set of configuration data; and
the third device (11 - 23) thereafter using the set of proportional and integral parameters to perform energy control at the site.

The present disclosure still further deals with any of the methods described herein, the method comprising the steps of:
the third device (11 - 23) deriving a set of proportional and integral parameters from the third set of configuration data; and
the third device (11 - 23) thereafter using the set of proportional and integral parameters to perform power control at the site.

The instant disclosure yet further deals with any of the methods described herein, the method comprising the steps of:
the third device (11 - 23) deriving a set of proportional and integral parameters from the third set of configuration data; and
the third device (11 - 23) thereafter using the set of proportional and integral parameters to perform temperature control at the site.

The present disclosure also any of the methods described herein, the method comprising the steps of:
the third device (11 - 23) deriving a set of proportional and integral and derivative parameters from the third set of configuration data; and
the third device (11 - 23) thereafter using the set of proportional and integral and derivative parameters to perform energy control at the site.

The instant disclosure further deals with any of the methods described herein, the method comprising the steps of:
the third device (11 - 23) deriving a set of proportional and integral and derivative parameters from the third set of configuration data; and
the third device (11 - 23) thereafter using the set of proportional and integral and derivative parameters to perform power control at the site.

The present disclosure still further deals with any of the methods described herein, the method comprising the steps of:
the third device (11 - 23) deriving a set of proportional and integral and derivative parameters from the third set of configuration data; and
the third device (11 - 23) thereafter using the set of proportional and integral and derivative parameters to perform temperature control at the site.

The instant disclosure yet further deals with an application of any of the methods described herein to configure a building (10) such as a commercial and/or residential and/or industrial building.

The present disclosure also deals with a configuration controller (5) for a site, the site comprising a plurality of devices (11 - 23), the plurality of devices (11 - 23) comprising a plurality of site controllers and a plurality of sensors and a plurality of appliances, the configuration controller (5) being configured to:
select a first device (11 - 23) from the plurality of appliances and/or from the plurality of sensors;
produce first descriptor data for the first device (11 - 23);
select a second device (11 - 23) from the plurality of appliances and/or from the plurality of sensors;
produce second descriptor data for the second device (11 - 23);
load data indicative of an ontology database (9), the ontology database comprising a set of rules;
produce the set of rules of the ontology database from the data indicative of the ontology database (9);
produce relationship data by applying at least one of the rules of the set of rules of the ontology database to the first descriptor data and to the second descriptor data;
select a third device (11 - 23) from the plurality of site controllers based on the relationship data;
produce a first set of configuration data based on the relationship data;
produce a second set of configuration data based on the relationship data;
produce a third set of configuration data based on the relationship data;
transmit the first set of configuration data to the first device (11 - 23);
transmit the second set of configuration data to the second device (11 - 23);
transmit the third set of configuration data to the third device (11 - 23);
apply the first set of configuration data to the first device (11 - 23);
apply the second set of configuration data to the second device (11 - 23); and
apply the third set of configuration data to the third device (11 - 23).

The present disclosure further deals with a configuration controller (5) for a site, the site comprising a plurality of devices (11 - 23), the plurality of devices (11 - 23) comprising a plurality of site controllers and a plurality of sensors and a plurality of appliances, the configuration controller (5) being configured to:
select a first device (11 - 23) from the plurality of appliances and/or from the plurality of sensors;
load a device database, the device database comprising descriptor data for the plurality of appliances and/or for the plurality of sensors;
use the device database to produce first descriptor data for the first device (11 - 23);
select a second device (11 - 23) from the plurality of appliances and/or from the plurality of sensors;
use the device database to produce second descriptor data for the second device (11 - 23);
load an ontology database comprising a set of rules applicable to the first device (11 - 23) and to the second device (11 - 23);
produce relationship data indicative of a relationship between the first device (11 - 23) and the second device (11 - 23) by applying at least one of the rules of the set of rules of the ontology database to the first descriptor data and to the second descriptor data;
select a third device (11 - 23) from the plurality of site controllers based on the relationship between the first device (11 - 23) and/or the second device (11 - 23) as indicated by the relationship data;
produce a first set of configuration data based on the relationship between the first device (11 - 23) and/or the second device (11 - 23) as indicated by the relationship data;
produce a second set of configuration data based on the relationship between the first device (11 - 23) and/or the second device (11 - 23) as indicated by the relationship data;
produce a third set of configuration data based on the relationship between the first device (11 - 23) and/or the second device (11 - 23) as indicated by the relationship data;
transmit the first set of configuration data to the first device (11 - 23);
transmit the second set of configuration data to the second device (11 - 23);
transmit the third set of configuration data to the third device (11 - 23);
apply the first set of configuration data to the first device (11 - 23);
apply the second set of configuration data to the second device (11 - 23); and
apply the third set of configuration data to the third device (11 - 23).

The instant disclosure also deals with any of the aforementioned configuration controllers (5), the configuration controller being configured to:
load an ontology database comprising a set of semantic rules applicable to the first device (11 - 23) and to the second device (11 - 23).

The present disclosure further deals with any of the aforementioned configuration controllers (5), the configuration controller being configured to:
load an ontology database comprising a set of rules specifically applicable to the first device (11 - 23) and to the second device (11 - 23).

The instant disclosure still deals with any of the aforementioned configuration controllers (5), the configuration controller being configured to:
load an ontology database comprising a set of semantic rules specifically applicable to the first device (11 - 23) and to the second device (11 - 23).

The instant disclosure also deals with any of the aforementioned configuration controllers (5), the configuration controller being configured to:
load an ontology database comprising a set of semantic rules applicable to the first descriptor data and to the second descriptor data.

The present disclosure further deals with any of the aforementioned configuration controllers (5), the configuration controller being configured to:
load an ontology database comprising a set of rules specifically applicable to the first descriptor data and to the second descriptor data.

The instant disclosure still deals with any of the aforementioned configuration controllers (5), the configuration controller being configured to:
load an ontology database comprising a set of semantic rules specifically applicable to the first descriptor data and to the second descriptor data.

The present disclosure also deals with a use of any of the configuration controllers (5) described herein to configure a building (10) such as a commercial and/or residential and/or industrial building.

The configuration controller (5) advantageously comprises a memory (7) storing data indicative of an ontology database (9), the configuration controller (5) being configured to:
load data indicative of the ontology database (9) from the memory (7).

The configuration controller (5) advantageously comprises a memory (7) storing data indicative of the building information model (8) of the site, the configuration controller (5) being configured to:
load the data indicative of the building information model (8) of the site from the memory (7).

The configuration controller (5) advantageously comprises a microcontroller and/or a microprocessor. A site controller preferably comprises a microcontroller and/or a microprocessor.

The configuration controller (5) for the site advantageously is a configuration controller (5) for a plurality of devices (11 - 23) of a site.

The instant disclosure also deals with any of the aforementioned configuration controllers (5), the configuration controller (5) being configured to:
load a device database, the device database comprising descriptor data for the plurality of appliances and for the plurality of sensors.

The present disclosure further deals with any of the aforementioned configuration controllers (5), the configuration controller (5) being configured to:
load a device database, the device database comprising descriptor data for the plurality of appliances and for the plurality of sensors and for the plurality of site controllers.

The instant disclosure still deals with any of the aforementioned configuration controllers (5), the configuration controller (5) being configured to:
produce relationship data indicative of a technical relationship between the first device (11 - 23) and the second device (11 - 23) by applying at least one of the rules of the set of rules of the ontology database to the first descriptor data and to the second descriptor data;
select a third device (11 - 23) from the plurality of site controllers based on the technical relationship between the first device (11 - 23) and/or the second device (11 - 23) as indicated by the relationship data;
produce a first set of configuration data based on the technical relationship between the first device (11 - 23) and/or the second device (11 - 23) as indicated by the relationship data;
produce a second set of configuration data based on the technical relationship between the first device (11 - 23) and/or the second device (11 - 23) as indicated by the relationship data; and
produce a third set of configuration data based on the technical relationship between the first device (11 - 23) and/or the second device (11 - 23) as indicated by the relationship data.

The present disclosure also deals with a computer program product comprising instructions which, when the program is executed by a configuration controller (5) as described herein, cause the configuration controller (5) to carry out the steps of any of the methods described herein.

The instant disclosure further deals with a computer program product comprising instructions which, when the program is executed by a processor such as a general-purpose processor, cause the processor to carry out the steps of any of the methods described herein.

The instant disclosure further deals with a computer-readable storage medium comprising instructions which, when the program is executed by a configuration controller (5) as described herein, cause the configuration controller (5) to carry out the steps of any of the methods described herein.

The present disclosure still deals with a computer-readable storage medium comprising instructions which, when the program is executed by a processor such as a general-purpose processor, cause the processor to carry out the steps of any of the methods described herein.

The aforementioned computer-readable storage media are advantageously tangible. The aforementioned computer-readable storage media ideally advantageously non-transitory.

### Reference numerals

1 device list
2 list of appliances
3 list of sensors
4 list of controllers
5 configuration controller
6 arithmetic logic unit
7 memory
8 data indicative of a building information model
9 data indicative of an ontology database
10 building
11 - 23 devices

## Claims

1. A method of configuring a site, the site comprising a plurality of devices (11 - 23), the plurality of devices (11 - 23) comprising a plurality of site controllers and a plurality of sensors and a plurality of appliances, the method comprising the steps of:
selecting a first device (11 - 23) from the plurality of appliances and/or from the plurality of sensors;
loading a device database, the device database comprising descriptor data for the plurality of appliances and/or for the plurality of sensors;
using the device database to produce first descriptor data for the first device (11 - 23), the first descriptor data describing one or more technical properties of the first device (11 - 23);
selecting a second device (11 - 23) from the plurality of appliances and/or from the plurality of sensors;
using the device database to produce second descriptor data for the second device (11 - 23), the second descriptor data describing one or more technical properties of the second device (11 - 23);
loading an ontology database comprising a set of rules applicable to the first device (11 - 23) and to the second device (11 - 23), the ontology database determining relationships between devices to be configured;
producing relationship data indicative of a technical relationship between the first device (11 - 23) and the second device (11 - 23) by applying at least one of the rules of the set of rules of the ontology database to the first descriptor data and to the second descriptor data;
selecting a third device (11 - 23) from the plurality of site controllers based on the technical relationship between the first device (11 - 23) and/or the second device (11 - 23) as indicated by the relationship data;
producing a first set of configuration data based on the relationship between the first device (11 - 23) and/or the second device (11 - 23) as indicated by the relationship data;
producing a second set of configuration data based on the relationship between the first device (11 - 23) and/or the second device (11 - 23) as indicated by the relationship data;
producing a third set of configuration data based on the relationship between the first device (11 - 23) and/or the second device (11 - 23) as indicated by the relationship data;
transmitting the first set of configuration data to the first device (11 - 23);
transmitting the second set of configuration data to the second device (11 - 23);
transmitting the third set of configuration data to the third device (11 - 23);
applying the first set of configuration data to the first device (11 - 23);
applying the second set of configuration data to the second device (11 - 23); and
applying the third set of configuration data to the third device (11 - 23).

2. The method according to claim 1, the method comprising the steps of:
selecting the first device (11 - 23) from the plurality of appliances;
producing a first set of appliance configuration data based on the relationship between the first device (11 - 23) and/or the second device (11 - 23) as indicated by the relationship data;
transmitting the first set of appliance configuration data to the first device (11 - 23); and
applying the first set of appliance configuration data to the first device (11 - 23), the first device (11 - 23) thereafter using the first set of appliance configuration data in operation of the first device (11 - 23).

3. The method according to any of the claims 1 to 2, the method comprising the steps of:
selecting the second device (11 - 23) from the plurality of sensors;
producing a second set of sensor configuration data based on the relationship between the first device (11 - 23) and/or the second device (11 - 23) as indicated by the relationship data;
transmitting the second set of sensor configuration data to the second device (11 - 23); and
applying the second set of sensor configuration data to the second device (11 - 23), the second device (11 - 23) thereafter using the second set of sensor configuration data in operation of the second device (11 - 23).

4. The method according to any of the claims 1 to 3, the method comprising the step of:
producing the first set of configuration data based on the relationship between the first device (11 - 23) and/or the second device (11 - 23) as indicated by the relationship data and based on the first descriptor data.

5. The method according to any of the claims 1 to 4, the method comprising the step of:
producing the first set of configuration data based on the based on the relationship between the first device (11 - 23) and/or the second device (11 - 23) as indicated by the relationship data and based on the first descriptor data and based on the second descriptor data.

6. The method according to any of the claims 1 to 5, the method comprising the steps of:
using the device database to produce the first descriptor data for the first device (11 - 23).

7. The method according to any of the claims 1 to 6, the method comprising the step of:
producing the relationship data indicative of a relationship between the first device (11 - 23) and the second device (11 - 23) by applying two or more of the rules of the set of rules of the ontology database to the first descriptor data and to the second descriptor data.

8. The method according to any of the claims 1 to 7, the method comprising the steps of:
loading data indicative of a building information model (8) of the site;
producing the building information model of the site from the data indicative of the building information model (8) of the site; and
producing the relationship data indicative of a relationship between the first device (11 - 23) and the second device (11 - 23) by applying the building information model of the site and at least one of the rules of the set of rules of the ontology database to the first descriptor data and to the second descriptor data.

9. The method according to any of the claims 1 to 8, the method comprising the steps of:
loading data indicative of a building information model (8) of the site;
producing the building information model of the site from the data indicative of the building information model (8) of the site;
producing an extended ontology database comprising a set of rules by merging the ontology database and the building information model of the site; and
producing the relationship data indicative of a relationship between the first device (11 - 23) and the second device (11 - 23) by applying at least one of the rules of the set of rules of the extended ontology database to the first descriptor data and to the second descriptor data.

10. The method according to any of the claims 1 to 9, the site comprising a configuration controller (5) having a memory (7) storing the data indicative of the ontology database (9), the method comprising the steps of:
the configuration controller (5) selecting the first device (11 - 23) from the plurality of appliances and/or from the plurality of sensors;
the configuration controller (5) producing the first descriptor data for the first device (11 - 23);
the configuration controller (5) selecting the second device (11 - 23) from the plurality of appliances and/or from the plurality of sensors;
the configuration controller (5) producing the second descriptor data for the second device (11 - 23);
the configuration controller (5) loading data indicative of the ontology database (9) from the memory (7);
the configuration controller (5) producing the relationship data by applying at least one of the rules of the set of rules of the ontology database to the first descriptor data and to the second descriptor data;
the configuration controller (5) selecting the third device (11 - 23) from the plurality of site controllers based on the relationship data;
the configuration controller (5) producing the third set of configuration data based on the relationship data;
the configuration controller (5) transmitting the third set of configuration data to the third device (11 - 23) using a digital communication bus and a digital communication protocol; and
the third device (11 - 23) applying the third set of configuration data, the third device (11 - 23) thereafter using the third set of configuration data in operation of the third device (11 - 23).

11. The method according to claim 10, the memory (7) storing data indicative of the building information model (8) of the site, the method comprising the steps of:
the configuration controller (5) loading the data indicative of the building information model (8) of the site from the memory (7);
the configuration controller (5) producing the building information model of the site from the data indicative of the building information model (8) of the site; and
the configuration controller (5) producing the relationship data indicative of a relationship between the first device (11 - 23) and the second device (11 - 23) by applying the building information model of the site and at least one of the rules of the set of rules of the ontology database to the first descriptor data and to the second descriptor data.

12. The method according to any of the claims 1 to 11, the method comprising the steps of:
the third device (11 - 23) deriving a set of proportional and integral parameters from the third set of configuration data; and
the third device (11 - 23) thereafter using the set of proportional and integral parameters to perform site control.

13. A configuration controller (5) for a site, the site comprising a plurality of devices (11 - 23), the plurality of devices (11 - 23) comprising a plurality of site controllers and a plurality of sensors and a plurality of appliances, the configuration controller (5) being configured to:
select a first device (11 - 23) from the plurality of appliances and/or from the plurality of sensors;
load a device database, the device database comprising descriptor data for the plurality of appliances and/or for the plurality of sensors;
use the device database to produce first descriptor data for the first device (11 - 23), the first descriptor data describing one or more technical properties of the first device (11 - 23);
select a second device (11 - 23) from the plurality of appliances and/or from the plurality of sensors;
use the device database to produce second descriptor data for the second device (11 - 23), the second descriptor data describing one or more technical properties of the second device (11 - 23);
load an ontology database comprising a set of rules applicable to the first device (11 - 23) and to the second device (11 - 23), the ontology database determining relationships between devices to be configured;
produce relationship data indicative of a technical relationship between the first device (11 - 23) and the second device (11 - 23) by applying at least one of the rules of the set of rules of the ontology database to the first descriptor data and to the second descriptor data;
select a third device (11 - 23) from the plurality of site controllers based on the technical relationship between the first device (11 - 23) and/or the second device (11 - 23) as indicated by the relationship data;
produce a first set of configuration data based on the relationship between the first device (11 - 23) and/or the second device (11 - 23) as indicated by the relationship data;
produce a second set of configuration data based on the relationship between the first device (11 - 23) and/or the second device (11 - 23) as indicated by the relationship data;
produce a third set of configuration data based on the relationship between the first device (11 - 23) and/or the second device (11 - 23) as indicated by the relationship data;
transmit the first set of configuration data to the first device (11 - 23);
transmit the second set of configuration data to the second device (11 - 23);
transmit the third set of configuration data to the third device (11 - 23);
apply the first set of configuration data to the first device (11 - 23);
apply the second set of configuration data to the second device (11 - 23); and
apply the third set of configuration data to the third device (11 - 23).

14. A computer program comprising instructions which, when the program is executed by the configuration controller (5) of claim 13, cause the configuration controller (5) to carry out the steps of any of the methods according to claims 1 to 12.

15. A computer-readable medium comprising instructions which, when executed by the configuration controller (5) of claim 13, cause the configuration controller (5) to carry out the steps of any of the methods according to claims 1 to 12.

## Patentansprüche

1. Verfahren zum Konfigurieren eines Standorts, der mehrere Geräte (11 - 23) umfasst, wobei die mehreren Geräte (11 - 23) mehrere Standortsteuereinheiten und mehrere Sensoren und mehrere Geräte umfassen, wobei das Verfahren folgende Schritte umfasst:
Auswählen eines ersten Gerätes (11 - 23) unter den mehreren Geräten und/oder den mehreren Sensoren,
Laden einer Gerätedatenbank, die Deskriptordaten für die mehreren Geräte und/oder die mehreren Sensoren umfasst,
Benutzen der Gerätedatenbank zum Erzeugen erster Deskriptordaten für das erste Gerät (11 - 23), wobei die ersten Deskriptordaten eine oder mehrere technische Eigenschaften des ersten Gerätes (11 - 23) beschreiben,
Auswählen eines zweiten Gerätes (11 - 23) unter den mehreren Geräten und/oder den mehreren Sensoren,
Benutzen der Gerätedatenbank zum Erzeugen zweiter Deskriptordaten für das zweite Gerät (11 - 23), wobei die zweiten Deskriptordaten eine oder mehrere technische Eigenschaften des zweiten Gerätes (11 - 23) beschreiben,
Laden einer Ontologiedatenbank, die einen Satz Regeln umfasst, welche auf das erste Gerät (11 - 23) und das zweite Gerät (11 - 23) anwendbar sind, wobei die Ontologiedatenbank Beziehungen zwischen zu konfigurierenden Geräten festlegt,
Erzeugen von Beziehungsdaten, die eine technische Beziehung zwischen des ersten Gerätes (11 - 23) und des zweiten Gerätes (11 - 23) angeben, durch Anwenden mindestens einer der Regeln des Satzes Regeln aus der Ontologiedatenbank auf die ersten und die zweiten Deskriptordaten,
Auswählen eines dritten Gerätes (11 - 23) unter den mehreren Standortsteuereinheiten auf der Grundlage der von den Beziehungsdaten angegebenen technischen Beziehung zwischen des ersten Gerätes (11 - 23) und/oder des zweiten Gerätes (11 - 23),
Erzeugen eines ersten Satzes Konfigurationsdaten auf der Grundlage der von den Beziehungsdaten angegebenen Beziehung zwischen des ersten Gerätes (11 - 23) und/oder des zweiten Gerätes (11 - 23),
Erzeugen eines zweiten Satzes Konfigurationsdaten auf der Grundlage der von den Beziehungsdaten angegebenen Beziehung zwischen des ersten Gerätes (11 - 23) und/oder des zweiten Gerätes (11 - 23),
Erzeugen eines dritten Satzes Konfigurationsdaten auf der Grundlage der von den Beziehungsdaten angegebenen Beziehung zwischen des ersten Gerätes (11 - 23) und/oder des zweiten Gerätes (11 - 23),
Übertragen des ersten Satzes Konfigurationsdaten zum ersten Gerät (11 - 23),
Übertragen des zweiten Satzes Konfigurationsdaten zum zweiten Gerät (11 - 23),
Übertragen des dritten Satzes Konfigurationsdaten zum dritten Gerät (11 - 23),
Anwenden des ersten Satzes Konfigurationsdaten auf das erste Gerät (11 - 23),
Anwenden des zweiten Satzes Konfigurationsdaten auf das zweite Gerät (11 - 23) und
Anwenden des dritten Satzes Konfigurationsdaten auf das dritte Gerät (11 - 23).

2. Das Verfahren nach Anspruch 1, das folgende Schritte umfasst:
Auswählen des ersten Gerätes (11 - 23) unter den mehreren Geräten,
Erzeugen eines ersten Satzes Gerätekonfigurationsdaten auf der Grundlage der von den Beziehungsdaten angegebenen Beziehung zwischen des ersten Gerätes (11 - 23) und/oder des zweiten Gerätes (11 - 23),
Übertragen des ersten Satzes Gerätekonfigurationsdaten zum ersten Gerät (11 - 23) und
Anwenden des ersten Satzes Gerätekonfigurationsdaten auf das erste Gerät (11 - 23), wobei das erste Gerät (11 - 23) danach bei ihrem Betrieb den ersten Satz Gerätekonfigurationsdaten benutzt.

3. Das Verfahren nach einem der Ansprüche 1 bis 2, das folgende Schritte umfasst:
Auswählen des zweiten Gerätes (11 - 23) unter den mehreren Sensoren,
Erzeugen eines zweiten Satzes Sensorkonfigurationsdaten auf der Grundlage der von den Beziehungsdaten angegebenen Beziehung zwischen des ersten Gerätes (11 - 23) und/oder des zweiten Gerätes (11 - 23),
Übertragen des zweiten Satzes Sensorkonfigurationsdaten zum zweiten Gerät (11 - 23) und
Anwenden des zweiten Satzes Sensorkonfigurationsdaten auf das zweite Gerät (11 - 23), wobei das zweite Gerät (11 - 23) danach bei ihrem Betrieb den zweiten Satz Sensorkonfigurationsdaten benutzt.

4. Das Verfahren nach einem der Ansprüche 1 bis 3, das folgenden Schritt umfasst:
Erzeugen des ersten Satzes Konfigurationsdaten auf der Grundlage der von den Beziehungsdaten angegebenen und auf den ersten Deskriptordaten basierenden Beziehung zwischen des ersten Gerätes (11 - 23) und/oder des zweiten Gerätes (11 - 23) .

5. Das Verfahren nach einem der Ansprüche 1 bis 4, das folgenden Schritt umfasst:
Erzeugen des ersten Satzes Konfigurationsdaten auf der Grundlage der von den Beziehungsdaten angegebenen und auf den ersten und den zweiten Deskriptordaten basierenden Beziehung zwischen des ersten Gerätes (11 - 23) und/oder des zweiten Gerätes (11 - 23).

6. Das Verfahren nach einem der Ansprüche 1 bis 5, das folgenden Schritt umfasst:
Benutzen der Gerätedatenbank zum Erzeugen der ersten Deskriptordaten für das erste Gerät (11 - 23).

7. Das Verfahren nach einem der Ansprüche 1 bis 6, das folgenden Schritt umfasst:
Erzeugen der Beziehungsdaten, die eine Beziehung zwischen des ersten Gerätes (11 - 23) und des zweiten Gerätes (11 - 23) angeben, durch Anwenden von zwei oder mehr Regeln aus dem Satz Regeln in der Ontologiedatenbank auf die ersten und die zweiten Deskriptordaten.

8. Das Verfahren nach einem der Ansprüche 1 bis 7, das folgende Schritte umfasst:
Laden von Daten, die ein Gebäudedatenmodell (8) für den Standort angeben,
Erzeugen des Gebäudedatenmodells für den Standort aus den das Gebäudedatenmodell (8) für den Standort angebenden Daten und
Erzeugen der Beziehungsdaten, die eine Beziehung zwischen des ersten Gerätes (11 - 23) und des zweiten Gerätes (11 - 23) angeben, durch Anwenden des Gebäudedatenmodells für den Standort und mindestens einer der Regeln aus dem Satz Regeln in der Ontologiedatenbank auf die ersten und die zweiten Deskriptordaten.

9. Das Verfahren nach einem der Ansprüche 1 bis 8, das folgende Schritte umfasst:
Laden von Daten, die ein Gebäudedatenmodell (8) für den Standort angeben,
Erzeugen des Gebäudedatenmodells für den Standort aus den das Gebäudedatenmodell (8) für den Standort angebenden Daten,
Erzeugen einer erweiterten Ontologiedatenbank, die einen Satz Regeln umfasst, durch Zusammenlegen der Ontologiedatenbank und des Gebäudedatenmodells für den Standort und
Erzeugen der Beziehungsdaten, die eine Beziehung zwischen des ersten Gerätes (11 - 23) und des zweiten Gerätes (11 - 23) angeben, durch Anwenden mindestens einer der Regeln aus dem Satz Regeln in der erweiterten Ontologiedatenbank auf die ersten und die zweiten Deskriptordaten.

10. Das Verfahren nach einem der Ansprüche 1 bis 9, wobei der Standort eine Konfigurationssteuereinheit (5) mit einem Speicher (7) umfasst, der die die Ontologiedatenbank (9) angebenden Daten speichert, wobei das Verfahren folgende Schritte umfasst:
Auswählen des ersten Gerätes (11 - 23) unter den mehreren Geräten und/oder den mehreren Sensoren durch die Konfigurationssteuereinheit (5),
Erzeugen der ersten Deskriptordaten für das erste Gerät (11 - 23) durch die Konfigurationssteuereinheit (5),
Auswählen des zweiten Gerätes (11 - 23) unter den mehreren Geräten und/oder den mehreren Sensoren durch die Konfigurationssteuereinheit (5),
Erzeugen der zweiten Deskriptordaten für das zweite Gerät (11 - 23) durch die Konfigurationssteuereinheit (5),
Laden von Daten, die die Ontologiedatenbank (9) angeben, durch die Konfigurationssteuereinheit (5) aus dem Speicher (7),
Erzeugen der Beziehungsdaten durch Anwenden mindestens einer der Regeln aus dem Satz Regeln in der Ontologiedatenbank auf die ersten und die zweiten Deskriptordaten durch die Konfigurationssteuereinheit (5),
Auswählen des dritten Gerätes (11 - 23) unter den mehreren Standortsteuereinheiten auf der Grundlage der Beziehungsdaten durch die Konfigurationssteuereinheit (5),
Erzeugen des dritten Satzes Konfigurationsdaten auf der Grundlage der Beziehungsdaten durch die Konfigurationssteuereinheit (5),
Übertragen des dritten Satzes Konfigurationsdaten zum dritten Gerät (11 - 23) unter Verwendung eines Digitalkommunikationsbusses und eines Digitalkommunikationsprotokolls durch die Konfigurationssteuereinheit (5), und
Anwenden des dritten Satzes Konfigurationsdaten durch das dritte Gerät (11 - 23), wobei das dritte Gerät (11 - 23) danach bei ihrem Betrieb den dritten Satz Konfigurationsdaten benutzt.

11. Das Verfahren nach Anspruch 10, wobei der Speicher (7) Daten speichert, die das Gebäudedatenmodell (8) für den Standort angeben, wobei das Verfahren folgende Schritte umfasst:
Laden der Daten, die das Gebäudedatenmodell (8) für den Standort angeben, durch die Konfigurationssteuereinheit (5) aus dem Speicher (7),
Erzeugen des Gebäudedatenmodells für den Standort aus den das Gebäudedatenmodell (8) für den Standort angebenden Daten durch die Konfigurationssteuereinheit (5) und
Erzeugen der Beziehungsdaten, die eine Beziehung zwischen des ersten Gerätes (11 - 23) und des zweiten Gerätes (11 - 23) angeben, durch Anwenden des Gebäudedatenmodells für den Standort und mindestens einer der Regeln aus dem Satz Regeln in der Ontologiedatenbank auf die ersten und die zweiten Deskriptordaten durch die Konfigurationssteuereinheit (5).

12. Das Verfahren nach einem der Ansprüche 1 bis 11, das folgende Schritte umfasst:
Ableiten eines Satzes proportionaler und integraler Parameter aus dem dritten Satz Konfigurationsdaten durch das dritte Gerät (11 - 23) und
danach Benutzen des Satzes proportionaler und integraler Parameter durch das dritte Gerät (11 - 23) zum Steuern und Regeln am Standort.

13. Konfigurationssteuereinheit (5) für einen Standort, der mehrere Geräte (11 - 23) umfasst, wobei die mehreren Geräte (11 - 23) mehrere Standortsteuereinheiten und mehrere Sensoren und mehrere Geräte umfassen, wobei die Konfigurationssteuereinheit (5) so konfiguriert ist, dass sie:
unter den mehreren Geräten und/oder den mehreren Sensoren ein erstes Gerät (11 - 23) auswählt,
eine Gerätedatenbank lädt, die Deskriptordaten für die mehreren Geräte und/oder die mehreren Sensoren umfasst,
die Gerätedatenbank zum Erzeugen erster Deskriptordaten für das erste Gerät (11 - 23) benutzt, wobei die ersten Deskriptordaten eine oder mehrere technische Eigenschaften des ersten Gerätes (11 - 23) beschreiben,
unter den mehreren Geräten und/oder den mehreren Sensoren ein zweites Gerät (11 - 23) auswählt,
die Gerätedatenbank zum Erzeugen zweiter Deskriptordaten für das zweite Gerät (11 - 23) benutzt, wobei die zweiten Deskriptordaten eine oder mehrere technische Eigenschaften des zweiten Gerätes (11 - 23) beschreiben,
eine Ontologiedatenbank lädt, die einen Satz Regeln umfasst, welche auf das erste Gerät (11 - 23) und das zweite Gerät (11 - 23) anwendbar sind, wobei die Ontologiedatenbank Beziehungen zwischen zu konfigurierenden Geräten festlegt,
durch Anwenden mindestens einer der Regeln aus dem Satz Regeln in der Ontologiedatenbank auf die ersten und die zweiten Deskriptordaten Beziehungsdaten erzeugt, die eine technische Beziehung zwischen des ersten Gerätes (11 - 23) und des zweiten Gerätes (11 - 23) angeben,
auf der Grundlage der von den Beziehungsdaten angegebenen technischen Beziehung zwischen des ersten Gerätes (11 - 23) und/oder des zweiten Gerätes (11 - 23) ein drittes Gerät (11 - 23) unter den mehreren Standortsteuereinheiten auswählt,
auf der Grundlage der von den Beziehungsdaten angegebenen Beziehung zwischen des ersten Gerätes (11 - 23) und/oder des zweiten Gerätes (11 - 23) einen ersten Satz Konfigurationsdaten erzeugt,
auf der Grundlage der von den Beziehungsdaten angegebenen Beziehung zwischen des ersten Gerätes (11 - 23) und/oder des zweiten Gerätes (11 - 23) einen zweiten Satz Konfigurationsdaten erzeugt,
auf der Grundlage der von den Beziehungsdaten angegebenen Beziehung zwischen des ersten Gerätes (11 - 23) und/oder des zweiten Gerätes (11 - 23) einen dritten Satz Konfigurationsdaten erzeugt,
den ersten Satz Konfigurationsdaten zum ersten Gerät (11 - 23) überträgt,
den zweiten Satz Konfigurationsdaten zum zweiten Gerät (11 - 23) überträgt,
den dritten Satz Konfigurationsdaten zum dritten Gerät (11 - 23) überträgt,
den ersten Satz Konfigurationsdaten auf das erste Gerät (11 - 23) anwendet,
den zweiten Satz Konfigurationsdaten auf das zweite Gerät (11 - 23) anwendet und
den dritten Satz Konfigurationsdaten auf das dritte Gerät (11 - 23) anwendet.

14. Computerprogramm mit Anweisungen, die, wenn das Programm von der Konfigurationssteuereinheit (5) nach Anspruch 13 ausgeführt wird, die Konfigurationssteuereinheit (5) dazu veranlassen, die Schritte eines der Verfahren nach Anspruch 1 bis 12 durchzuführen.

15. Computerlesbares Medium mit Anweisungen, die, wenn sie von der Konfigurationssteuereinheit (5) nach Anspruch 13 ausgeführt werden, die Konfigurationssteuereinheit (5) dazu veranlassen, die Schritte eines der Verfahren nach Anspruch 1 bis 12 durchzuführen.

## Revendications

1. Procédé de configuration d'un site, le site comprenant une pluralité de dispositifs (11 à 23), la pluralité de dispositifs (11 à 23) comprenant une pluralité de contrôleurs du site et une pluralité de capteurs et une pluralité d'appareils, le procédé comprenant les étapes consistant à :
sélectionner un premier dispositif (11 à 23) à partir de la pluralité d'appareils et/ou de la pluralité de capteurs ;
charger une base de données du dispositif, la base de données du dispositif comprenant des données descriptives pour la pluralité d'appareils et/ou pour la pluralité de capteurs ;
utiliser la base de données du dispositif afin de produire des premières données descriptives pour le premier dispositif (11 à 23), les premières données descriptives décrivant une ou plusieurs propriétés techniques du premier dispositif (11 à 23) ;
sélectionner un deuxième dispositif (11 à 23) à partir de la pluralité d'appareils et/ou de la pluralité de capteurs ;
utiliser la base de données du dispositif afin de produire des deuxièmes données descriptives pour le deuxième dispositif (11 à 23), les deuxièmes données descriptives décrivant une ou plusieurs propriétés techniques du deuxième dispositif (11 à 23) ;
charger une base de données d'ontologie comprenant un ensemble de règles applicables au premier dispositif (11 à 23) et au deuxième dispositif (11 à 23), la base de données d'ontologie déterminant des relations entre des dispositifs à configurer ;
produire des données de relations indicatives d'une relation technique entre le premier dispositif (11 à 23) et le deuxième dispositif (11 à 23) en appliquant au moins une des règles de l'ensemble de règles de la base de données d'ontologie aux premières données descriptives et aux deuxièmes données descriptives ;
sélectionner un troisième dispositif (11 à 23) à partir de la pluralité de contrôleurs du site sur la base des relations techniques entre le premier dispositif (11 à 23) et/ou le deuxième dispositif (11 à 23) comme indiqué par les données de relation ;
produire un premier ensemble de données de configuration sur la base des relations entre le premier dispositif (11 à 23) et/ou le deuxième dispositif (11 à 23) comme indiqué par les données de relation ;
produire un deuxième ensemble de données de configuration sur la base des relations entre le premier dispositif (11 à 23) et/ou le deuxième dispositif (11 à 23) comme indiqué par les données de relation ;
produire un troisième ensemble de données de configuration sur la base des relations entre le premier dispositif (11 à 23) et/ou le deuxième dispositif (11 à 23) comme indiqué par les données de relation ;
transmettre le premier ensemble de données de configuration au premier dispositif (11 à 23) ;
transmettre le deuxième ensemble de données de configuration au deuxième dispositif (11 à 23) ;
transmettre le troisième ensemble de données de configuration au troisième dispositif (11 à 23) ;
appliquer le premier ensemble de données de configuration au premier dispositif (11 à 23) ;
appliquer le deuxième ensemble de données de configuration au deuxième dispositif (11 à 23) ; et
appliquer le troisième ensemble de données de configuration au troisième dispositif (11 à 23).

2. Le procédé selon la revendication 1, le procédé comprenant les étapes consistant à :
sélectionner le premier dispositif (11 à 23) à partir de la pluralité d'appareils ;
produire un premier ensemble de données de configuration d'appareil sur la base des relations entre le premier dispositif (11 à 23) et/ou le deuxième dispositif (11 à 23) comme indiqué par les données de relation ;
transmettre le premier ensemble de données de configuration d'appareil au premier dispositif (11 à 23) ; et
appliquer le premier ensemble de données de configuration d'appareil au premier dispositif (11 à 23), le premier dispositif (11 à 23) utilisant ensuite le premier ensemble de données de configuration d'appareil lors de l'utilisation du premier dispositif (11 à 23).

3. Le procédé selon l'une quelconque des revendications 1 à 2, le procédé comprenant les étapes consistant à :
sélectionner le deuxième dispositif (11 à 23) à partir de la pluralité de capteurs ;
produire un deuxième ensemble de données de configuration du capteur sur la base des relations entre le premier dispositif (11 à 23) et/ou le deuxième dispositif (11 à 23) comme indiqué par les données de relations ;
transmettre le deuxième ensemble de données de configuration du capteur au deuxième dispositif (11 à 23) ; et
appliquer le deuxième ensemble de données de configuration du capteur au deuxième dispositif (11 à 23), le deuxième dispositif (11 à 23) utilisant ensuite le deuxième ensemble de données de configuration de capteur pendant le fonctionnement du deuxième dispositif (11 à 23).

4. Le procédé selon l'une quelconque des revendications 1 à 3, le procédé comprenant l'étape consistant à :
produire le premier ensemble de données de configuration sur la base des relations entre le premier dispositif (11 à 23) et/ou le deuxième dispositif (11 à 23) comme indiqué par les données de relation et sur la base des premières données descriptives.

5. Le procédé selon l'une quelconque des revendications 1 à 4, le procédé comprenant l'étape consistant à :
produire le premier ensemble de données de configuration sur la base des relations entre le premier dispositif (11 à 23) et/ou le deuxième dispositif (11 à 23) comme indiqué par les données de relation et sur la base des premières données descriptives et sur la base des deuxièmes données descriptives.

6. Le procédé selon l'une quelconque des revendications 1 à 5, le procédé comprenant les étapes consistant à :
utiliser la base de données du dispositif afin de produire les premières données descriptives pour le premier dispositif (11 à 23).

7. Le procédé selon l'une quelconque des revendications 1 à 6, le procédé comprenant l'étape consistant à :
produire les données de relation indicatives d'une relation entre le premier dispositif (11 à 23) et le deuxième dispositif (11 à 23) en appliquant deux règles ou plus de l'ensemble de règles de la base de données d'ontologie aux premières données descriptives et aux deuxièmes données descriptives.

8. Le procédé selon l'une quelconque des revendications 1 à 7, le procédé comprenant les étapes consistant à :
charger des données indicatives d'un modèle d'information de construction (8) du site ;
produire le modèle d'information de construction du site à partir des données indicatives du modèle d'information de construction (8) du site ; et
produire les données de relations indicatives d'une relation entre le premier dispositif (11 à 23) et le deuxième dispositif (11 à 23) en appliquant le modèle d'information de construction du site et au moins une des règles de l'ensemble de règles de la base de données d'ontologie aux premières données descriptives et aux deuxièmes données descriptives.

9. Le procédé selon l'une quelconque des revendications 1 à 8, le procédé comprenant les étapes consistant à :
charger des données indicatives d'un modèle d'information de construction (8) du site ;
produire le modèle d'information de construction du site à partir des données indicatives du modèle d'information de construction (8) du site ;
produire une base de données d'ontologie étendue comprenant un ensemble de règles en fusionnant la base de données d'ontologie et le modèle d'information de construction du site ; et
produire les données de relations indicatives d'une relation entre le premier dispositif (11 à 23) et le deuxième dispositif (11 à 23) en appliquant au moins une des règles de l'ensemble de règles de la base de données d'ontologie étendue aux premières données descriptives et aux deuxièmes données descriptives.

10. Le procédé selon l'une quelconque des revendications 1 à 9, le site comprenant un contrôleur de configuration (5) doté d'une mémoire (7) stockant les données indicatives de la base de données d'ontologie (9), le procédé comprenant les étapes de :
la sélection par le contrôleur de configuration (5) du premier dispositif (11 à 23) à partir de la pluralité d'appareils et/ou à partir de la pluralité de capteurs ;
la production par le contrôleur de configuration (5) des premières données descriptives pour le premier dispositif (11 à 23) ;
la sélection par le contrôleur de configuration (5) du deuxième dispositif (11 à 23) à partir de la pluralité d'appareils et/ou de la pluralité de capteurs ;
la production par le contrôleur de configuration (5) des deuxièmes données descriptives pour le deuxième dispositif (11 à 23) ;
le chargement par le contrôleur de configuration (5) de données indicatives de la base de données d'ontologie (9) à partir de la mémoire (7) ;
la production par le contrôleur de configuration (5) des données de relations en appliquant au moins une des règles de l'ensemble de règles de la base de données d'ontologie aux premières données descriptives et aux deuxièmes données descriptives ;
la sélection par le contrôleur de configuration (5) du troisième dispositif (11 à 23) à partir de la pluralité de contrôleurs de site sur la base des données de relations ;
la production par le contrôleur de configuration (5) du troisième ensemble de données de configuration sur la base des données de relations ;
la transmission par le contrôleur de configuration (5) du troisième ensemble de données de configuration au troisième dispositif (11 à 23) en utilisant un bus de communication numérique et un protocole de communication numérique ; et
l'application par le troisième dispositif (11 à 23) du troisième ensemble de données de configuration, le troisième dispositif (11 à 23) utilisant ensuite le troisième ensemble de données de configuration pendant le fonctionnement du troisième dispositif (11 à 23).

11. Le procédé selon la revendication 10, la mémoire (7) stockant des données indicatives du modèle d'information de construction (8) du site, le procédé comprenant les étapes de :
le chargement par le contrôleur de configuration (5) des données indicatives du modèle d'informations de construction (8) du site à partir de la mémoire (7) ;
la production par le contrôleur de configuration (5) du modèle d'information de construction du site à partir des données indicatives du modèle d'information de construction (8) du site ; et
la production par le contrôleur de configuration (5) des données de relations indicatives d'une relation entre le premier dispositif (11 à 23) et le deuxième dispositif (11 à 23) en appliquant le modèle d'informations de construction du site et au moins une des règles de l'ensemble de règles de la base de données d'ontologie aux premières données descriptives et aux deuxièmes données descriptives.

12. Le procédé selon l'une quelconque des revendications 1 à 11, le procédé comprenant les étapes de :
l'obtention par le troisième dispositif (11 à 23) d'un ensemble de paramètres proportionnels et intégraux à partir du troisième ensemble de données de configuration ; et
l'utilisation par le troisième dispositif (11 à 23) par la suite de l'ensemble de paramètres proportionnels et intégraux afin de réaliser le contrôle du site.

13. Contrôleur de configuration (5) pour un site, le site comprenant une pluralité de dispositifs (11 à 23), la pluralité de dispositifs (11 à 23) comprenant une pluralité de contrôleurs de site et une pluralité de capteurs et une pluralité d'appareils, le contrôleur de configuration (5) étant configuré afin de :
sélectionner un premier dispositif (11 à 23) à partir de la pluralité d'appareils et/ou de la pluralité de capteurs ;
charger une base de données d'un dispositif, la base de données du dispositif comprenant des données descriptives pour la pluralité d'appareils et/ou pour la pluralité de capteurs ;
utiliser la base de données du dispositif afin de produire de premières données descriptives pour le premier dispositif (11 à 23), les premières données descriptives décrivant une ou plusieurs propriétés techniques du premier dispositif (11 à 23) ;
sélectionner un deuxième dispositif (11 à 23) à partir de la pluralité d'appareils et/ou de la pluralité de capteurs ;
utiliser la base de données du dispositif afin de produire de deuxièmes données descriptives pour le deuxième dispositif (11 à 23), les deuxièmes données descriptives décrivant une ou plusieurs propriétés techniques du deuxième dispositif (11 à 23) ;
charger une base de données d'ontologie comprenant un ensemble de règles applicables au premier dispositif (11 à 23) et au deuxième dispositif (11 à 23), la base de données d'ontologie déterminant des relations entre des dispositifs à configurer ;
produire des données de relations indicatives d'une relation technique entre le premier dispositif (11 à 23) et le deuxième dispositif (11 à 23) en appliquant au moins une des règles de l'ensemble de règles de la base de données d'ontologie aux premières données descriptives et aux deuxièmes données descriptives ;
sélectionner un troisième dispositif (11 à 23) à partir de la pluralité de contrôleurs de site sur la base de la relation technique entre le premier dispositif (11 à 23) et/ou le deuxième dispositif (11 à 23) comme indiqué par les données de relations ;
produire un premier ensemble de données de configuration sur la base des relations entre le premier dispositif (11 à 23) et/ou le deuxième dispositif (11 à 23) comme indiqué par les données de relations ;
produire un deuxième ensemble de données de configuration sur la base des relations entre le premier dispositif (11 à 23) et/ou le deuxième dispositif (11 à 23) comme indiqué par les données de relations ;
produire un troisième ensemble de données de configuration sur la base de la relation entre le premier dispositif (11 à 23) et/ou le deuxième dispositif (11 à 23) comme indiqué par les données de relations ;
transmettre le premier ensemble de données de configuration au premier dispositif (11 à 23) ;
transmettre le deuxième ensemble de données de configuration au deuxième dispositif (11 à 23) ;
transmettre le troisième ensemble de données de configuration au troisième dispositif (11 à 23) ;
appliquer le premier ensemble de données de configuration au premier dispositif (11 à 23) ;
appliquer le deuxième ensemble de données de configuration au deuxième dispositif (11 à 23) ; et
appliquer le troisième ensemble de données de configuration au troisième dispositif (11 à 23).

14. Programme informatique comprenant des instructions qui, lorsque le programme est exécuté par le contrôleur de configuration (5) selon la revendication 13, amènent le contrôleur de configuration (5) à réaliser les étapes de l'un quelconque des procédés selon les revendications 1 à 12.

15. Support lisible sur ordinateur comprenant des instructions qui, lorsqu'elles sont exécutées par le contrôleur de configuration (5) selon la revendication 13, amènent le contrôleur de configuration (5) à réaliser les étapes de l'un quelconque des procédés selon les revendications 1 à 12.
